(19) Europäisches Patentamt
European Patent Office
Office européen des brevets

(11) **EP 2 422 740 B1**

(12) **EUROPEAN PATENT SPECIFICATION**

(45) Date of publication and mention
of the grant of the patent:
**13.03.2013 Bulletin 2013/11**

(51) Int Cl.:
***A61C 13/00*** $^{(2006.01)}$

(21) Application number: **10009046.3**

(22) Date of filing: **31.08.2010**

(54) **Computer-implemented method for digitally designing a dental restoration and a computer-readable medium**

Computerimplementiertes Verfahren für die digitale Planung eines Zahnersatzes und computerlesbares Medium

Procédé informatique pour concevoir de manière numérique une restauration dentaire et support lisible sur ordinateur

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**29.02.2012 Bulletin 2012/09**

(73) Proprietor: **Straumann Holding AG**
**4002 Basel (CH)**

(72) Inventors:
• **Manzer, Martin**
**12489 Berlin (DE)**
• **Lawitschka, Uwe**
**12489 Berlin (DE)**

(74) Representative: **Grünecker, Kinkeldey,**
**Stockmair & Schwanhäusser**
**Leopoldstrasse 4**
**80802 München (DE)**

(56) References cited:
**US-A1- 2009 246 726**

• **STEINBRECHER T ET AL: "Dental inlay and onlay construction by iterative laplacian surface editing", COMPUTER GRAPHICS FORUM JULY 2008 BLACKWELL PUBLISHING LTD GB, vol. 27, no. 5, July 2008 (2008-07), pages 1441-1447, XP002616277, DOI: DOI:10.1111/J. 1467-8659.2008.01284.X**

## Description

The invention relates to a computer-implemented method for digitally designing a dental restoration and to a computer-readable medium.

The design of tooth restorations requires a deep dental knowledge. The challenge of computer aided tooth design lies in the computation of a functional correct morphology of the missing chewing surface. A solution must be robust and automated such that the user actually benefits from time saving and better results.

The article "Dental inlay and onlay construction by iterative Laplacian surface editing" by T. Steinbrecher et al. (Eurographics Symposium on Geometry Processing 2008; July 2 - 4, 2008 in Copenhagen, Denmark; Volume 27(2008), No. 5; p. 1441 - 1447) discloses that a model tooth may be adapted by using Laplacian surface editing to a patient's tooth. After adaptation, the part of the model tooth lying above the cavity will be joined with the cavity mesh to create the actual inlay reconstruction. The part of the model tooth lying above the healthy part of the tooth should be adapted to the remaining tooth surface. The model tooth is segmented into parts that lie "above cavity" or "on surface".

From each vertex of the model tooth that is not yet clarified as "above cavity", two rays are cast, one towards the centre of the tooth to be reconstructed, and one away from it. Thereby all rays by definition pass through the centre of the tooth to be reconstructed. Only the closest hit point is considered. The hit points are then classified according to their location as "above cavity", "on surface", or "undefined".

The adaptation is an iterative process, alternating segmentation and deformation. For vertices classified as "on surface", ray collisions with the tooth to be reconstructed are used again.

As the rays are cast, for each iteration, starting from a vertex of the model tooth also the segmentation has to be performed again. This is because by starting from a vertex of the model tooth, it is unknown where the location of a hit point on the tooth to be reconstructed will be. Even before the first deformation of the model tooth it needs to be segmented.

Desired deformation vectors may be weighted by deformation weights and further a global deformation weight linearly depending on the iteration step may be used as a scaling factor for all weights.

After the adaptation is completed, all vertices classified as "on surface" and not having a neighbour that is classified as "above cavity" will be removed and thus a mesh that covers the cavity remains wherein its boundary is aligned to the preparation margin.

It is the object of the present invention to enable an automatic design of dental restorations by means of Laplacian surface deformation resulting in stable and reliable data for a dental restoration.

This object is achieved with a computer-implemented method according to claim 1 and with a computer-readable medium according to claim 11. Preferred embodiments of the invention are disclosed in the dependent claims. All the method steps described in the following may be performed automatically and do not necessarily need the interaction of a user.

The present invention relates to a computer-implemented method for digitally designing a dental restoration for a rest tooth, wherein the rest tooth is described by data of the rest tooth and wherein a tooth template is described by data of the tooth template, by means of an Laplacian surface deformation to deform the tooth template towards the surface of the rest tooth, wherein the method uses, for the Laplacian surface deformation, an angle weighting function depending on:

- the angle between the normal direction of a target on the surface of the rest tooth or the normal direction of a handle on the tooth template; and

- the direction of a line connecting the target and the handle;

wherein the angle weighting function is used to weight the handle for deforming the tooth template towards the rest tooth.

A rest tooth may be considered as a tooth of a patient and/or (digital) data describing it, wherein said tooth is not complete, i.e. has missing parts, due to caries, dental preparation like milling and so on. For the processes in the computer-implemented method digital data of the rest tooth may be used, wherein these data may be achieved by scanning of a dental model of the rest tooth or by directly scanning the patient's rest tooth. The surface of the rest tooth may be described by a mesh of triangles, wherein the triangles may all be the same or wherein the triangles may have different shapes. It is also possible to use other polygons and/or use different polygons (e.g. like triangles and pentagons) in one mesh.

The rest tooth may have a prepared surface/prepared part which in general means that this surface/part has been prepared, e.g. by a dentist by milling. Preferably, the prepared surface/part may be provided with a dental restoration. Further, the rest tooth may have an unprepared surface/unprepared part at which the intact surface of the rest tooth is present. In some cases a non-intact surface of the rest tooth may be considered as "unprepared", e.g. in case no dental restoration should or will be provided to this surface of the rest tooth.

A tooth template may represent a digital representation of a generic tooth, wherein tooth templates according to the different tooth types (molar, premolar, incisor etc.) may be provided. The surface of the tooth template may be described by a mesh of triangles, wherein the triangles may all be the same or wherein the triangles may have different shapes. It is also possible to use other polygons and/or use different polygons (e.g. like triangles and pentagons) in one mesh.

By taking into account also an angle weighting function for performing a Laplacian surface deformation to deform a tooth template towards a rest tooth, an advanced digital design of a dental restoration is enabled, as the shapes of the rest tooth and/or tooth template may directly be taken into account by the normal direction of the target and/or the normal direction of the tooth template. Thereby for example good pairs of a target and a handle can be indentified. In case the angle between the normal direction and the line connecting the target and the handle is small, the target and the handle may be considered to fit together such that a high weight for the target (or the pair of handle and target) may be assigned for deformation. If the connecting line has a large angle with the normal direction, this can be seen as an indication that the handle and the target do not fit together very well. Hence in the deformation the handle (or the pair of handle and target) can be assigned a low weight. Other considerations of the angle are possible as well.

The method may further comprise defining the line connecting the target and the handle as being directed along the normal direction of the target or along the normal direction of the handle.

In this case, the angle indicates the deviation between the normal direction of the handle and the normal direction of the target. Thus, the angle may be considered to be a measure how similar the shapes of the rest tooth and the tooth template are. The smaller the angle the better is the similarity between the shapes.

The method may further comprise defining the angle weighting function as decreasing with increasing angle. For small angles the shapes the rest tooth and the tooth template may be assumed similar and therefore, higher weights may be used for them as compared to angles with larger values. For angles with larger values, it may be assumed that a larger difference in the shapes of the rest tooth and the tooth template are present as also the difference in the normal directions of the target and of the handle are larger.

The decrease of the angle weighting function may for example be described by a Wendland weighting function.

The method may use a product of the angle weighting function and at least one or two of a global weighting function or a distance weighting function to weight the handle for deforming the tooth template towards the rest tooth. By using a product of two or three weighting functions representing different dependencies, e.g. of angle, iteration step and/or distance, the deformation of the tooth template may be improved as the deformation of the handles may be performed taking into account various aspects.

The method may further comprise defining the global weighting function as increasing with each iteration step in case the Laplacian surface deformation is performed iteratively.

Further the distance weighting function may be defined as decreasing with increasing distances between the target and the handle, wherein the dependence of the distance weight on the distance may vary with each iteration step in case the Laplacian surface deformation is performed iteratively.

In order to allow for a general position of the template, weights may be independent from the distance at the beginning of the iteration process. As the iteration proceeds large distances may be penalized more and more by reducing the respective handle weights. This may reduce the impact of false projections. The less the distance, the more certain it may be that a correct projection is found.

The method may further comprise defining the data of the tooth template as a first polygonal mesh describing the surface of the tooth template and defining the data of the rest tooth as a second polygonal mesh describing the surface of the rest tooth, wherein the handle lies inside a polygon of the first mesh, on an edge of a polygon of the first mesh or on a vertex of a polygon of the first and/or wherein the target lies inside a polygon of the second mesh, on an edge of a polygon of the second mesh or on a vertex of a polygon of the second mesh.

The method may further comprise defining the normal direction of the target /handle for example by one of the three following possibilities:

- when the target/handle lies within the polygon, by the normal direction of the polygon of the second/first mesh or by an average of the normal direction of the polygon and the normal directions of its neighbouring polygons or of polygons that lie within a sphere or a volume of a predefined size (and/or shape) around the polygon;

- when the target/handle lies on an edge of a polygon of the second/first mesh, by the average of the normal directions of polygons having this edge, or the average of normal directions of these polygons and their neighbouring polygons or the average of normal directions of polygons that lie within a sphere or a volume of a predefined size (and/or shape) around the vertex;

- when the target/handle lies on a vertex (a corner of a polygon) of a polygon of the second/first mesh, by an average of the normal directions of polygons that have this vertex as a corner point (or additionally their neighbouring polygons) or of polygons that lie within a sphere or a volume of a predefined size (and/or shape) around the vertex.

The average of the normal directions may be a weighted average wherein the weight may depend on the size of a triangle or it may be an unweighted average where all triangles considered for averaging are taken into account with equal weights.

In general, a normal direction to a surface at a point is typically the same as the normal direction to the tangent plane to said surface at said point.

For the targets and for the handles any point of a surface can be used. This means that a point on a surface of the rest tooth or a point on the template can be either a point inside a triangle (or polygon in general) or may be a corner of a triangle (or polygon in general) in case the surface of the rest tooth and the template are described by a mesh comprising triangles (or polygons in general). This on the one hand gives more flexibility in the choice of targets and handles as compared to the prior art but additionally allows for triangles (or polygons in general) of largely different sizes to be used. There is no need to have a large number of relatively small triangles in order to describe the surface of the rest tooth or the tooth template which assures that there is a sufficiently high density of vertices in order to perform a reasonable surface deformation. Since in the present method also points inside a triangle may be used there is no need for a large number of vertices and triangles of largely different size may be used. E.g. triangles having a two dimensional size of their surface 10 times or 50 times the two dimensional size of the surface of the smallest triangle of the data set can be used. This allows for reduced data sets for the digital description of the surface of the rest tooth and of the template in comparison to the prior art.

All vertices of a portion of a mesh describing the rest tooth portion that is considered for the Laplacian deformation can be used as targets or only a portion (subset thereof). Also at least one point of each triangle (polygon) of a mesh describing the rest tooth portion that is considered for the Laplacian deformation can be used as targets or only a portion (subset) of the triangles.

Moreover, automatically deforming the tooth template in the Laplacian surface deformation towards the rest tooth may further comprise moving the handle towards the target.

Using a handle that lies in a direction normal to the surface at the point of the target or a target that lies in a direction normal to the surface at the point of the handle additionally contributes to robust and reliable results using the Laplace surface deformation. By having handles and targets aligned in a direction normal either to the surface of the rest tooth or normal to the surface of the tooth template a good choice of a handle and a corresponding target is found which allows for deformation of a template into a proper tooth surface.

It is possible to first define a target on the surface of the rest tooth and then to identify the corresponding handle in a direction normal to the surface of the rest tooth. Thus a target may be provided at specific points of the surface of the rest tooth which may be of particular interest. Such a point may e.g. be on the preparation margin. By firstly choosing the target on the surface of the rest tooth and then choosing a corresponding handle it may thus be assured that a point of particular importance may be taken into account for the surface deformation. If first the handles are defined and afterwards the corresponding targets are chosen, then it cannot be assured that specific points of the surface of the rest tooth which are of particular interest are taken into account. The preparation margin defines the border line of the prepared surface and the unprepared surface of the rest tooth that should be provided with a dental restoration. Taking points of the preparation margin into account for the surface deformation may result in a smooth transition at the preparation margin, i.e. a smooth transition between the dental restoration and the rest tooth at the preparation margin.

Iteratively performing the deformation of the tooth template may use a handle weight that is increased as the iteration process proceeds, preferably starting with a pre-defined minimum handle weight.

By iteratively increasing the weight, the general position of the tooth template may be first adjusted to the outer surface of the rest tooth, thus the shape preservation may be predominant and self-intersection may be avoided. As the iteration proceeds and weights increase, the method may find correct handles and the template may be more and more deformed towards the surface of the rest tooth.

The method may further comprise the step of defining the handle weight for the deformation step as a product comprising a global weight increasing with each iteration step, and at least one or two of a distance weight decreasing with increasing distances between the target and the handle, wherein the dependence of the distance weight on the distance may vary with each iteration step, or an angle weight that depends on the angle between the normal direction of the target and the normal direction of the handle.

A result of the inventive method may be that the transition between the rest tooth and the tooth template is as smooth as possible, which means that sharp edges and transitions which may achieve high loads are prevented.

Further, the present invention is related to a computer-readable medium having stored thereon instructions, which when executed by a processor, are adapted to perform any of the above identified method steps.

Preferred embodiments of the invention will be illustrated with reference to the enclosed figures. In the figures:

Figure 1 shows a prepared tooth with surrounding teeth and a tooth template;

Figure 2 shows a prepared tooth, a tooth template, first and second bounding boxes;

Figure 3 shows rays to select handles and targets;

Figure 4a shows the result of a surface deformation in a single step;

Figure 4b shows the result of a surface deformation using an iterative process with successively increasing handle weights;

Figure 5 shows cement gap and spacer gap;

Figure 6 shows prepared tooth, deformed tooth template and minimal surface;

Figure 7 shows the global weighting function;

Figure 8 shows the Wendland weighting function;

Figure 9 shows distance weighting function;

Figure 10 shows the angle weighting function;

Figure 11 a shows the distance between a target on the rest tooth and a handle on the tooth template; and

Figure 11b shows an enhanced view of figure 11a.

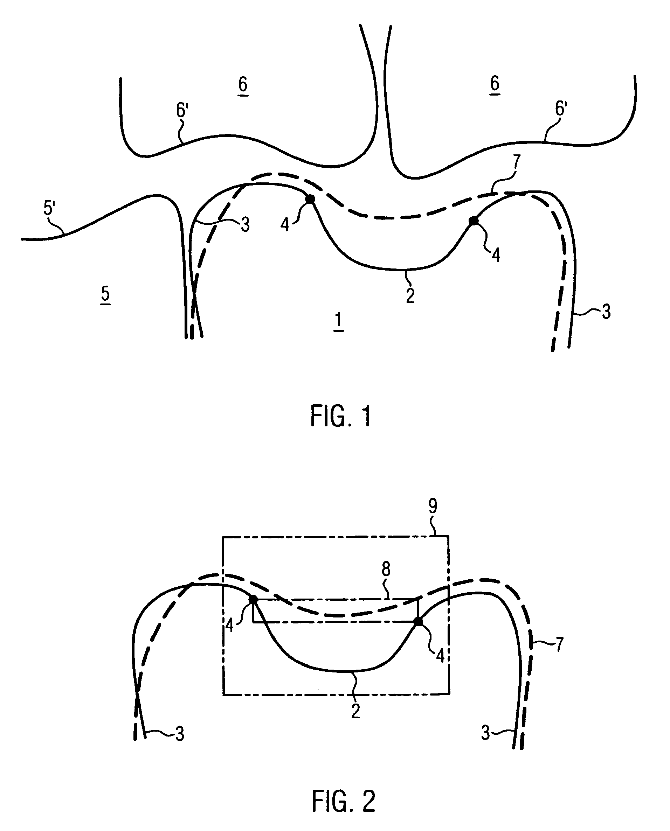

The schematic representations shown in Figures 1 to 11b may be displayed for example on a computer display or the like, wherein data sets may be provided corresponding to the depicted objects.

Figure 1 shows schematically a rest tooth 1 comprising a prepared region, the so-called lower surface 2, which is separated from the unprepared rest tooth, the so-called outer surface 3, by the preparation margin 4. The depicted rest tooth 1 has a neighbouring tooth 5 with an approximal surface 5' and two opposite teeth 6 with occlusal surfaces 6'. In order to provide the rest tooth 1 with a dental restoration a tooth template 7 may be used. The tooth template 7 may be positioned with respect to the rest tooth 1 such that the local coordinate systems of the rest tooth 1 and the tooth template 7 coincide in x direction and in z direction. For example, the x direction may be given by the buccal direction, the y direction by the mesial-distal axis and the z direction by the occlusal direction.

The rest tooth 1 shown in figure 1 comprises a cavity as prepared region, which means that the dental restoration to be designed may be an inlay. However, a rest tooth may also have prepared regions extending on surface regions, such as one or more cusp tips which means that the dental restoration to be designed may be an onlay or partial crown. A veneer may have to be designed when a thin layer of the tooth surface has to be provided with a dental restoration.

As shown in figure 2, for performing the deformation of the tooth template 7 a first bounding box 8 may be defined by the preparation margin 4. A second bounding box 9 may be defined in a predefined distance from the first bounding box 8 such that part of the tooth template 7 and part of the outer surface 3 of the rest tooth 1 are cut out. By using the second bounding box 9 the deformation process may be simplified and accelerated as not the whole tooth template 7 will be deformed but only the part of it which is located within the second bounding box 9. A predefined distance to the first bounding box 8 may be kept in order to avoid cut out fissures in the tooth template 7. However, for performing the deformation of the tooth template 7, the use of bounding boxes is not necessarily required.

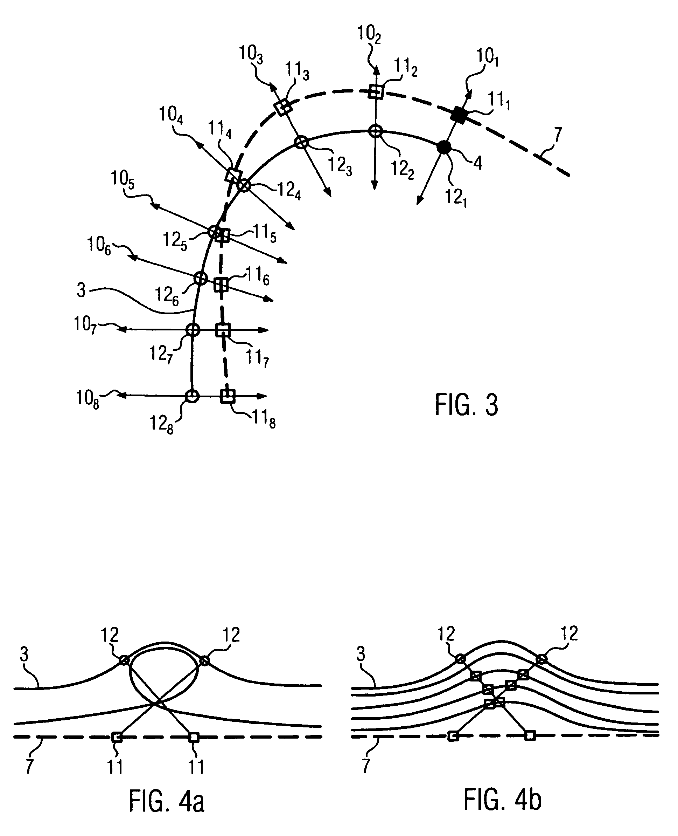

For deforming the tooth template 7 such that the cavity in the rest tooth 1 may be covered by a suitable part of the tooth template 7, an algorithm may be used, wherein as shown in figure 3, lines $10_1$ - $10_8$ are cast each going through a point on the surface of the rest tooth, each of the lines being directed along the normal direction of the point of the surface of the rest tooth. The lines may be cast starting at points on the outer surface 3 of the rest tooth 1 or starting at points on the preparation margin 4.

If an intersection of a line $10_1$ - $10_8$ with the tooth template 7 is observed the respective intersection point on the template 7 may be chosen as handle $11_1$ - $11_8$ (squares) and the respective point on the rest tooth 1 as respective target $12_1$ - $12_a$ (circles). If an intersection of a line $10_1$ - $10_8$ with the tooth template 7 is observed in both positive and negative normal directions, the intersection point with the smaller distance to the point the line going through of the surface of the rest tooth 1 may be chosen.

The open circles $12_2$ - $12_8$ correspond to targets on the outer surface 3 of the rest tooth 1 having respective handles on the tooth template 7 indicated by the open squares $11_2$ - $11_8$. The filled circle $12_1$ corresponds to a point on the preparation margin 4 and the respective handle on the tooth template 7 is indicated by the filled square $11_1$.

Other methods for defining targets and handles are possible as well.

After having determined the handles $11_1$- $11_8$ on the tooth template 7 and respective targets $12_1$ - $12_8$ on the rest tooth 1, the deformation of the tooth template 7 may be performed as an iterative process.

The deformation of the tooth template 7, according to the targets $12_1$- $12_8$ may be performed in the unprepared region of the rest tooth 1 and at the preparation margin 4. As the algorithm starts at points on the surface of the rest tooth 1 and the algorithm uses these points as targets $12_1$- $12_8$, it is not required to make a determination after each iteration step whether a point of the tooth template 7 which may be a handle for the next iteration step lies above the prepared or the unprepared region of the rest tooth 1 or above the preparation margin 4. The algorithm may be considered to deform the tooth template 7 by pulling the tooth template 7 towards the rest tooth 1 and as the location of the targets $12_1$- $12_8$ on the rest tooth 1 is known, it is also known that a handle on the tooth template 7 will be deformed towards this location.

Handle weights may increase from low values to bigger values successively during the iterative process. Figures 4a and 4b illustratively show the result when performing the deformation in a single step and when performing the deformation using an iterative process, respectively. When using a single step for performing the deformation, self-intersections may be produced resulting in a deformed surface that is not usable for a dental restoration. However, when the iteration starts with low handle weights, the shape preservation characteristic of the Laplacian surface deformation is predominant and self-intersection is avoided. As shown in figure 4b the deformed tooth template 7 is adjusted to fit the outer surface 3.

Once new handles are selected, the new deformed shape of the tooth template has to be calculated. This may be achieved by solving an optimization problem, wherein a global deformation energy $E$ may be constructed that measures how much a deformed triangle mesh with vertex coordinates $p_1',..., p_n'$ differs from its initial rest pose with vertex coordinates $p_1, ..., p_n$. The deformation energy $E$ integrates locally defined changes of the shape. The local shape of vertex $i$ is described by the discrete Laplacian $\Delta p_i = 2H_i n_i$ which is a three dimensional vector that points in the direction of the unit length vertex normal $n_i$ and has a magnitude twice the mean curvature $H_i$.

The global deformation energy may be formulated as

$$E(p_1',...p_n') = \sum_i A_i \left\| \delta_i' - \delta_i \right\|^2 + \sum_j w_j \left\| h_j' - h_j \right\|^2, \tag{1}$$

wherein the left term measures the weighted squared distance between local shapes in the deformed mesh and local shapes in the rest pose. The right term of equation 1 measures the weighted squared distance between the positions of the deformed handles $h_j' = h_j(p_1',...,p_n')$ and their targets $h_j = h_j(p_1...,p_n)$. $A_i$ is the two dimensional Voroni area around the vertex $i$ and $w_j = 1$.

The discrete Laplacian may be computed as

$$\delta_i = \frac{1}{2 \cdot A_i} \cdot \sum (\cot \alpha_{ij} + \cot \beta_{ij}) \cdot (p_i - p_j), \tag{2}$$

wherein vertices $j$ are the one-ring neighbours of vertex $i$ and $\alpha_{ij}$ and $\beta_{ij}$ are the two angles opposite to the edge $(i,j)$. In the presence of obtuse triangles, the respective Voroni region extends beyond the one-ring neighbours of the vertex. To guarantee a perfect tiling of the surface without overlapping the Voroni area is truncated, resulting in the Laplacian of a deformed vertex being:

$$\delta_i' = \frac{1}{2 \cdot A_i'} \cdot \sum (\cot \alpha_{ij}' + \cot \beta_{ij}') \cdot (p_i' - p_j'). \tag{3}$$

The handles $j$ are allowed to be at any point of the triangle surface (and not only being vertices) by using barycentric coordinates $(\lambda_{j1}, \lambda_{j2}, \lambda_{j3})$ of the respective triangle $(p_{j1}, p_{j2}, P_{j3})$:

$$h_j(p_1,...,p_n) = \lambda_{j1}p_{j1} + \lambda_{j2}p_{j2} + \lambda_{j3}p_{j3} , \qquad (4)$$

where

$$\lambda_{jk} = \frac{\left\|(p_{ja}-h_j)\times(p_{jb}-h_j)\right\|}{\left\|(p_{j2}-p_{j1})\times(p_{j3}-p_{j1})\right\|} \qquad (5)$$

for $a \neq b$, $a \neq k$ and $b \neq k$.

It is assumed that areas and angles are preserved such that $\alpha'_{ij}=\alpha_{ij}$, $\beta'_{ij} = \beta_{ij}$ and $A'_i = A_i$ and hence, the Laplacian operator $\Delta p'_i$ can be described linearly in the deformed vertex coordinates. Thus, the global deformation energy $E$ has a quadratic form

$$E(p') = \left\|\sqrt{M}(Lp'-\delta)\right\|^2 + \left\|\sqrt{W}(Cp'-h)\right\|^2 , \qquad (6)$$

where $L$ is the matrix form of the Laplacian operator, $C$ encapsulates the barycentric coordinates, $\delta$ is a vector with the $x$, $y$ or $z$ coordinates of Laplacian $\delta_i$, $h$ is a vector containing the respective handle coordinates, $M$ and $W$ are diagonal matrices containing the weights $A_i$ and $w_i$, respectively, and p' is the vector with the deformed vertex coordinates. The deformed tooth template can be reconstructed by a minimization in the linear least square sense.

The global deformation energy can be reformulated to:

$$E(p') = p'^T (L^T ML + C^T WC)p' - 2p'^T (L^T M\delta + C^T Wh) + \delta^T M\delta + h^T Wh . \qquad (7)$$

The minimization

$$\frac{\partial}{\partial p'} E(p') = 0 \qquad (8)$$

leads to the normal equations

$$(L^T ML + C^T WC)p' = L^T M\delta + C^T Wh \qquad (9)$$

which are basically a linear system of size $n \times n$ .

For the Laplacian surface deformation of the tooth template 7 the handle weights $handlew\ g,l.p,D\ (i,d,\alpha)$ may be defined by the following formula:

$$handlew_{g,l,p,D}(i,d,\alpha) = globalw_{g,l,p}(i) \cdot distw(i,d)_{D,l} \cdot anglew(\alpha) . \qquad (10)$$

The global weighting function 19 may be defined by

$$globalw_{g,I,p}(i) = g \cdot \left(\frac{i}{I}\right)^p, \tag{11}$$

wherein $g \geq 1$ is a global weighting factor, $I \geq 1$ is the number of iteration steps, $i \in [1,I]$ is the current iteration step and the power $p \geq 1$ determines the shape of the function.

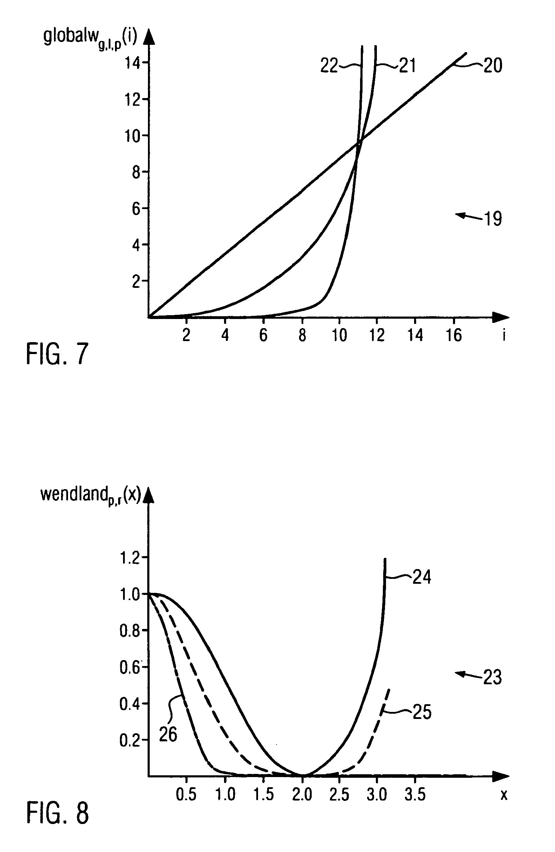

In figure 7 three exemplary curves 20, 21, 22 of the global weighting function 19 are shown, wherein for all three curves the global weighting factor $g$ and the number of iteration steps $I$ are the same, respectively. The line 20 represents the global weighting function 19 having a power of $p = 1$. The other two curves 21, 22 have larger power values.

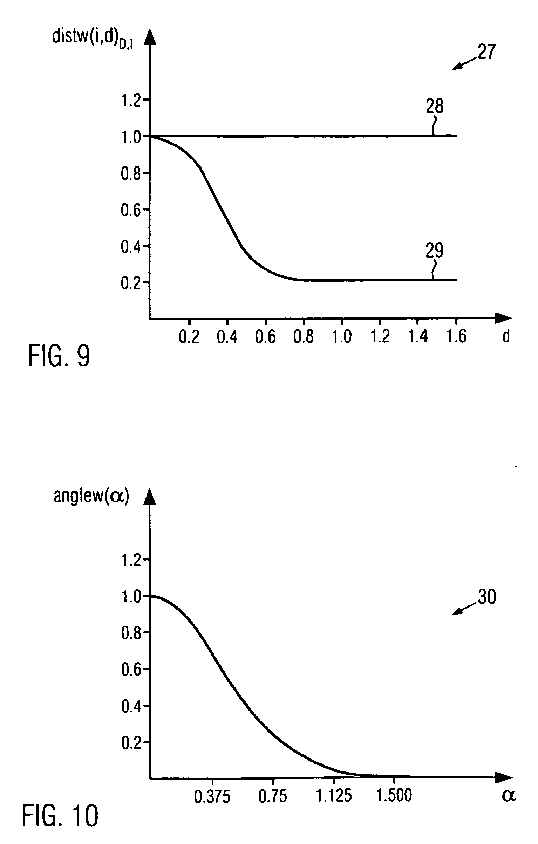

To define the distance weighting function 27 as shown in figure 9, the Wendland weighting function 23 may be taken into account and thus, the distance weighting function may be defined by

$$distw(i,d)_{D,I} = 1 - wendland_{4,I}(I-i) + \begin{cases} 0 & for \quad d \geq D \\ wendland_{4,I}(I-i) \cdot wendland_{4,D}(d) & else \end{cases}, \tag{12a}$$

or preferably by

$$distw(i,d)_{D,i} = wendland_{8,I}(i) + \begin{cases} 0 & for \quad d \geq D \\ \left(1 - wendland_{8,I}(i)\right) \cdot wendland_{4,D}(d) & else \end{cases}, \tag{12b}$$

*wherein $d \geq 0$ is the distance, $D \geq 0$ is the support.*

The Wendland weighting function 23 is defined by

$$wendland_{p,r}(x) = \left(1 - \frac{x}{r}\right)^p \cdot \left(\frac{p \cdot x}{r} + 1\right) \tag{13}$$

wherein $r \geq 0$ is the radius of support and $p \geq 2$ determines the shape of the function. In figure 8, three exemplary Wendland weighting functions 24, 25, 26 are shown that all have the same radius of support $r$. The parameter $p$ increases for the curve with the solid line 24 to the dashed line 25 and to the dot and dash line 26.

In Figure 9, two curves for the distance weighting function 27 are shown. Both curves have the same number of iterations $I$ and the same support $D$, respectively. For the first iteration $i = I$ the curve 28 of the distance weighting function 27 shows almost no dependency from the distance $d$. As the iteration process proceeds, i.e. at a larger iteration step $i$, the distance weight for larger distances between target and handle decreases as can be seen in figure 9. This behaviour of the distance weighting function 27 reduces the impact of false projections for large distances between target and handle.

The angle weighting function 30 may be defined by the following formula:

$$anglew(\alpha) = \begin{cases} 0 & for \quad \alpha \geq \pi/2 \\ wendland_{4,\pi/2}(\alpha) & else \end{cases}, \tag{14}$$

wherein $\alpha \in [0,\pi]$ may be the angle between the normal direction of the target and the normal direction of the handle. In figure 10 an exemplary curve of the angle weighting function 30 is shown.

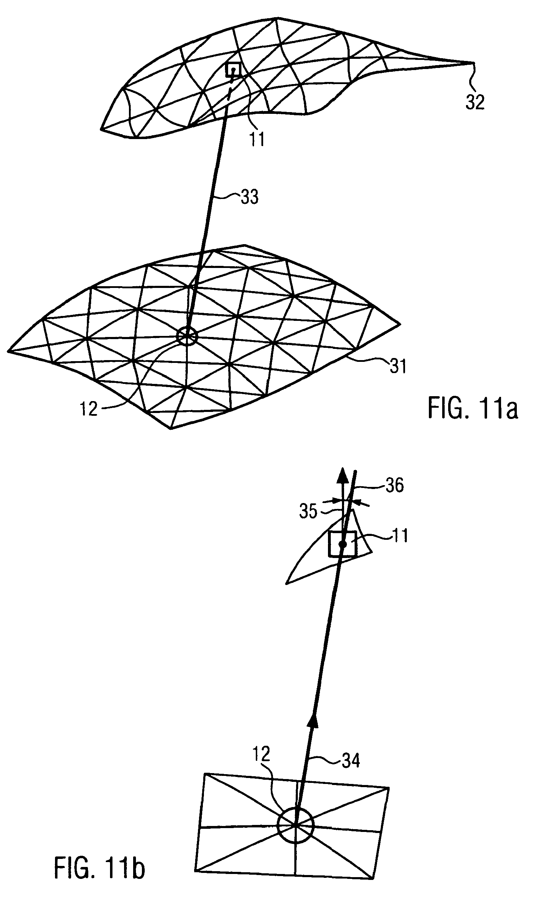

Figures 11 a and 11 b show how the distance 33 between a target 12 and a handle 11 may be defined. The surface of the rest tooth 1 and the tooth template 7 are shown as being represented by triangular meshes 31, 32, respectively. Also other polygonal meshes are possible for describing the surface of the rest tooth 1 and/or the tooth template 7, wherein the type of polygons do not have to be the same for both meshes but may be the same.

As shown in figure 11 a, the target 12 is a vertex on the surface of the rest tooth 1, while the handle on the tooth template 7 is a point inside a triangle of the mesh 32. Figure 11 b shows an enhanced view of figure 11a to better illustrate an exemplary definition of the angle $\alpha$ 36 between the normal direction of the target 12 and the normal direction 35 of the handle 11. In the depicted case, a line for determining the handle 11 on the tooth template 7 is given by going through the target 12 on the surface of the rest tooth 1 and being directed along the normal direction 34 at the target 12. The line 33 may also extend from the target 12 to the handle 11 in another direction then the normal direction 34.

After applying a fixed number of iterations *i*, a tooth template 7 may exist that has been deformed such that it describes the unprepared regions of the rest tooth 1. This part of the tooth template 7 that lies inside the preparation margin 4, i.e. the area that is surrounded by the preparation margin, may describe the surface of the dental restoration to be designed, wherein this surface represents the surface of the dental restoration that will not be hidden by the rest tooth 1 after attaching the dental restoration to the rest tooth 1. This surface may be e.g. a part of the chewing surface of a molar.

For the final design of the dental restoration the part of the tooth template 7 inside the preparation margin is relevant. To extract this part, the so-called deformed tooth template 18, from the tooth template 7, a digital cut along the preparation margin 4 may be performed, such that only data being related to the tooth template 7 inside of the preparation margin 4 is taken into account for further processes.

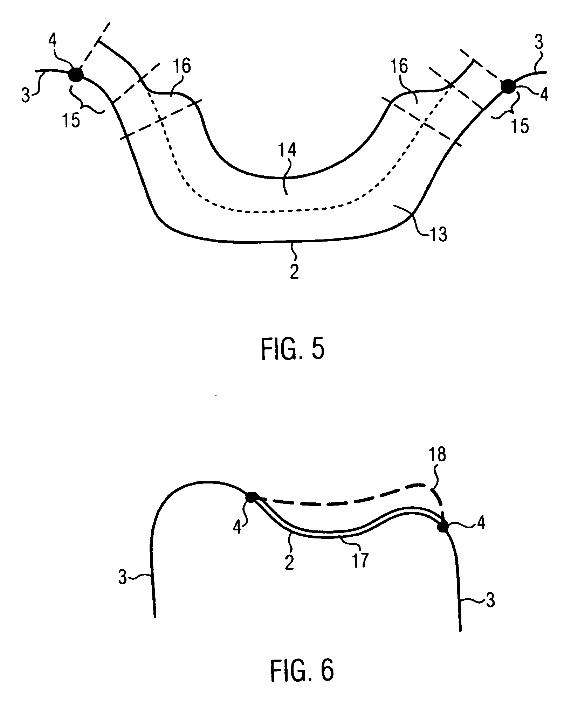

After finalizing the deformation of the tooth template 7, the surface of the dental restoration describing the lower surface 2 may be adapted by adding a cement gap 13 and a spacer gap 14, wherein a at some distance 15 from the preparation margin 4 a spacer transition 16 may exist as shown in figure 5. For example, an offset function may be chosen to achieve a smooth transition from the cement gap 13 to the spacer gap 14:

$$offset_{b,t,c,s}(d) = c + \begin{cases} 0 & for & d \le b \\ s & for & d \ge b+t, \\ \frac{s}{2} \cdot \left(1 + \sin\left(\pi \cdot \frac{d-b}{t} - \frac{\pi}{2}\right)\right) & else \end{cases} \quad (15)$$

wherein *d* is the geodesic distance to the preparation margin 4, *b* is the distance of the spacer gap 14 to the preparation margin 4, *t* is the spacer gap transition 16, c is the thickness of the cement gap 13 and s is the thickness of the spacer gap 14.

For the manufacturing of the dental restoration it is required that a certain minimum wall thickness is ensured. Therefore, a minimal surface 17, as shown in figure 6, may be constructed and every vertex of the deformed tooth template 18 may be required to lie above this minimal surface 17. The minimal surface 17 may be constructed by an offset on the rest tooth 1 and the mesh of the cavity to be provided with the dental restoration.

To correct the deformed tooth template 18 with respect to the minimal surface 17, rays (i.e. lines) may be cast from vertices of the deformed tooth template 18 along the positive normal direction of the respective vertex. A vertex is below the minimum wall thickness if the ray belonging to said vertex intersects a mesh triangle of the minimal surface and the difference between the normal direction of the vertex and the normal direction of the triangle is less than $\pi/2$. In such a case, a respective handle is selected and the intersection point on the minimum surface 17 is selected as target. Handle weights may be set in the same manner as for the deformation process of the tooth template 7, but the distance weighting is described independent from the current iteration as no general positioning is required.

In order to achieve a good correction result, first the deformation may be applied to the boundary of the deformed tooth template 18 while fixing handles in the interior using large handle weights. In a second deformation step, the boundary may be fixed and the interior may be adjusted to the minimal surface 17.

One exemplary for an offset to define the minimal surface is given by

$$o_{b,w,W}(d) = \begin{cases} 0 & \text{for} \quad d \leq 0 \\ b\sqrt{1-(1-\frac{d}{b})^2} & \text{for} \quad d > 0, d \leq b \\ w & \text{for} \quad d \geq W \\ b + \frac{w-b}{2} \cdot \left(1 + \sin\left(\pi \cdot \frac{d-b}{W-b} - \frac{\pi}{2}\right)\right) & \text{else} \end{cases} \qquad (16)$$

wherein $b > 0$ is a predefined wall thickness at the boundary and $w > b$ a predefined wall thickness at a geodesic distance $W > b$ from the boundary. This function guarantees a minimum wall thickness $b$ at the boundary and ensures that deformed tooth template 18 forms at least almost a rectangular angle at the preparation margin 4 with respect to the lower surface 2 of rest tooth 1.

Depending on the shape of the transition between the lower surface 2 and the unprepared part of the rest tooth 1, the thickening near the preparation margin 4 may have different forms. In case, the transition forms almost a rectangular angle, then almost no or none thickening can be observed and a flat and smooth transition between the corrected, deformed tooth template (i.e. the deformed tooth template 18 that has been corrected taking into account a minimal thickness) and the unprepared part of the rest tooth 1 is provided. In case, the transition has an angle smaller than 90°, then a thickening may be provided ensuring that the dental restoration will have a sufficient thickness also near the preparation margin.

Another possibility for defining a minimal surface 17 is to apply an offset along the normal direction of each vertex of the lower surface 2 (wherein preferably the cement gap 13 and/or spacer gap 14 has already be added to the lower surface 2). Such an offset may have a predefined value over the whole range of the lower surface 2 or the offset may have smaller values near the preparation margin 4 and larger values at some predefined distance from the preparation margin 4 or vice versa. Instead of taking into account the normal direction of each vertex, an average of several normal directions of several vertices may be determined and then an offset may be applied to this averaged normal direction.

**Claims**

1. Computer-implemented method for digitally designing a dental restoration for a rest tooth (1), wherein the rest tooth (1) is described by data of the rest tooth (1) and wherein a tooth template (7) is described by data of the tooth template (7), by means of an Laplacian surface deformation to deform the tooth template (7) towards the surface of the rest tooth (1), the method being **characterized by** using, for the Laplacian surface deformation, an angle weighting function (30) depending on:

   - the angle (36) between the normal direction of a target (12) on the surface of the rest tooth (1) or the normal direction of a handle (11) on the tooth template (7); and
   - the direction of a line connecting the target (12) and the handle (11);

   wherein the angle weighting function (30) is used to weight the handle (11) for deforming the tooth template (7) towards the rest tooth (1);
   wherein the data of the rest tooth (1) are achieved by scanning of a dental model of the rest tooth or by directly scanning a patient's rest tooth; and
   wherein the tooth template represents a digital representation of a generic tooth.

2. The computer-implemented method according to claim 1, wherein the method further comprises defining the line connecting the target (12) and the handle (11) as being directed along:

   - the normal direction of the target (12), or
   - the normal direction of the handle (11)

   such that angle (36) indicates the deviation between the normal direction of the handle and the normal direction of the target.

3. The computer-implemented method according to claim 1, wherein the method further comprises defining the line connecting the target (12) and the handle (11) as being directed along the normal direction of the target (12) and the angle weighting function (30) is depending on the normal direction of the handle (11) on the tooth template (7) and the direction of the line connecting the target (12) and the handle (11).

4. The computer-implemented method according to claim 1 or 3, wherein the method further comprises defining the angle weighting function (30) as decreasing with increasing angle (36).

5. The computer-implemented method according to claim 4, wherein the decrease of the angle weighting function (30) is described by a Wendland weighting function (23).

6. The computer-implemented method according to claims 1 to 5, wherein the method uses a product of the angle weighting function (30) and one or two of a global weighting function (19) or a distance weighting function (27) to weight the handle (11) for deforming the tooth template (7) towards the rest tooth (1).

7. The computer-implemented method according to claim 6, wherein the method further comprises defining the global weighting function (19) as increasing with each iteration step in case the Laplacian surface deformation is performed iteratively.

8. The computer-implemented method according to claim 6 or 7, wherein the method further comprises defining the distance weighting function (27) as decreasing with increasing distances (33) between the target (12) and the handle (11), wherein the dependence of the distance weight on the distance (33) may vary with each iteration step in case the Laplacian surface deformation is performed iteratively.

9. The computer-implemented method according to claims 1 to 8, wherein the method further comprises defining the data of the tooth template (7) as a first polygonal mesh (32) describing the surface of the tooth template (7) and defining the data of the rest tooth (1) as a second polygonal mesh (31) describing the surface of the rest tooth (1), wherein the handle (11) lies inside a polygon of the first mesh (32), on an edge of a polygon or on a vertex of a polygon and wherein the target (12) lies inside a polygon of the second mesh (31), on an edge of a polygon (31) or on a vertex of a polygon (31).

10. The computer-implemented method according to claim to 9, wherein the method further comprises defining the normal direction of the target (12)/handle (11):

    - when the target (12)/handle (11) lies within the polygon, by the normal direction of the polygon of the second/ first mesh (32, 31) or by an average of the normal direction of the polygon and the normal directions of its neighbouring polygons;
    - when the target (12)/handle (11) lies on an edge of a polygon of the second/first mesh (32, 31), by the normal directions of polygons having this edge;
    - when the target (12)/handle (11) lies on a vertex of a polygon of the second/first mesh (32, 31), by an average of the normal directions of polygons that have this vertex as a corner point or of polygons that lie within a sphere or a volume of a predefined size around the vertex.

11. Computer-readable medium having stored thereon instructions, which when executed by a processor, are adapted to perform any of the method steps of claims 1 to 10.

**Patentansprüche**

1. Computerimplementiertes Verfahren zum digitalen Entwerfen eines Zahnersatzteils für einen Restzahn (1), wobei der Restzahn (1) durch Daten des Restzahns (1) beschrieben wird und wobei eine Zahnvorlage (7) durch Daten der Zahnvorlage (7) beschrieben wird, mittels einer Laplaceoberflächendeformation, um die Zahnvorlage (7) in Richtung der Oberfläche des Restzahns (1) zu verformen, wobei das Verfahren **gekennzeichnet ist durch** Verwenden einer Winkelgewichtungsfunktion (30) für die Laplaceoberflächendeformation, wobei die Winkelgewichtungsfunktion (30) abhängt von:

    - dem Winkel (36) zwischen der Normalenrichtung eines Targets (12) auf der Oberfläche des Restzahns (1) oder der Normalenrichtung eines Handles (11) auf der Zahnvorlage (7); und
    - der Richtung einer Linie, die das Target (12) und das Handle (11) verbindet;

wobei die Winkelgewichtungsfunktion (30) verwendet wird, um das Handle (11) zum Deformieren der Zahnvorlage (7) in Richtung des Restzahns (1) zu gewichten;

wobei die Daten des Restzahns (1) **durch** Scannen eines Zahnmodells des Restzahns oder durch direktes Scannen eines Patientenrestzahns erhalten werden; und

wobei die Zahnvorlage eine digitale Darstellung eines generischen Zahns darstellt.

2. Das computerimplementierte Verfahren nach Anspruch 1, wobei das Verfahren weiter Definieren der Linie umfasst, die das Target (12) und das Handle (11) verbindet, als ausgerichtet sein entlang:

- der Normalenrichtung des Targets (12); oder
- der Normalenrichtung des Handles (11),

so dass der Winkel (36) die Abweichung zwischen der Normalenrichtung des Handles und der Normalenrichtung des Targets anzeigt

3. Das computerimplementierte Verfahren nach Anspruch 1, wobei das Verfahren weiter Definieren der Linie umfasst, die das Target (12) und das Handle (11) verbindet, als ausgerichtet sein entlang der Normalenrichtung des Targets (12) und die Winkelgewichtungsfunktion (30) abhängt von der Normalenrichtung des Handles (11) auf der Zahnvorlage (7) und der Richtung der Linie, die das Target (12) und das Handle (11) verbindet.

4. Das computerimplementierte Verfahren nach Anspruch 1 oder 3, wobei das Verfahren weiter Definieren der Winkelgewichtungsfunktion (30) als abnehmend mit zunehmendem Winkel (36) umfasst.

5. Das computerimplementierte Verfahren nach Anspruch 4, wobei die Abnahme der Winkelgewichtungsfunktion (30) durch eine Wendlandgewichtungsfunktion (23) beschrieben wird.

6. Das computerimplementierte Verfahren nach Ansprüchen 1 bis 5, wobei das Verfahren ein Produkt der Winkelgewichtungsfunktion (30) und einem oder zwei einer globalen Gewichtungsfunktion (19) oder einer Abstandsgewichtungsfunktion (27) verwendet, um das Handle (11) zur Deformierung der Zahnvorlage (7) in Richtung des Restzahns (1) zu gewichten.

7. Das computerimplementierte Verfahren nach Anspruch 6, wobei das Verfahren weiter Definieren der globalen Gewichtungsfunktion (19) als zunehmend mit jedem Iterationsschritt umfasst, wenn die Laplaceoberflächendeformation iterativ durchgeführt wird.

8. Das computerimplementierte Verfahren nach Anspruch 6 oder 7, wobei das Verfahren weiter Definieren der Abstandsgewichtungsfunktion (27) als abnehmend mit zunehmenden Abständen (33) zwischen dem Target (12) und dem Handle (11) umfasst, wobei die Abhängigkeit der Abstandsgewichtung von dem Abstand (33) mit jedem Iterationsschritt variieren kann, wenn die Laplaceoberflächendeformation iterativ durchgeführt wird.

9. Das computerimplementierte Verfahren nach Ansprüchen 1 bis 8, wobei das Verfahren weiter Definieren der Daten der Zahnvorlage (7) als ein erstes vieleckiges Netz (32) umfasst, das die Oberfläche der Zahnvorlage (7) beschreibt und Definieren der Daten des Restzahns (1) als ein zweites vieleckiges Netz (31), das die Oberfläche des Restzahns (1) beschreibt, wobei das Handle (11) innerhalb eines Vielecks des ersten Netzes (32), auf einer Kante eines Vielecks oder auf einem Vertex eines Vielecks liegt und wobei das Target (12) innerhalb eines Vielecks des zweiten Netzes (31), auf einer Kante eines Vielecks (31) oder auf einem Vertex eines Vielecks (31) liegt.

10. Das computerimplementierte Verfahren nach Anspruch 9, wobei das Verfahren weiter Definieren der Normalenrichtung des Targets (12)/Handles (11) umfasst:

- wenn das Target (12)/Handle (11) innerhalb des Vielecks liegt, durch die Normalenrichtung des Vielecks des zweiten/ersten Netzes (32, 31) oder durch einen Mittelwert der Normalenrichtung des Vielecks und der Normalenrichtungen seiner benachbarten Vielecke;
- wenn das Target (12)/Handle (11) auf einer Kante eines Vielecks des zweiten/ersten Netzes (32, 31) liegt, durch die Normalenrichtungen der Vielecke, die diese Kante haben;
- wenn das Target (12)/Handle (11) auf einem Vertex eines Vielecks des zweiten/ersten Netzes (32, 31) liegt, durch einen Mittelwert der Normalenrichtungen der Vielecke, die diesen Vertex als Eckpunkt haben oder von Vielecken, die innerhalb einer Kugel oder eines Volumens mit einer vordefinierten Größe um den Vertex liegen.

**11.** Computerlesbares Medium mit darauf gespeicherten Instruktionen, die, wenn sie durch einen Prozessor ausgeführt werden, ausgelegt sind, um jeden der Verfahrensschritte der Ansprüche 1 bis 10 auszuführen.

**Revendications**

**1.** Procédé informatique pour concevoir de manière numérique une prothèse dentaire pour une dent d'appui (1), pour lequel la dent d'appui (1) est décrite par des données sur la dent d'appui (1) et pour lequel un gabarit de dent (7) est décrit par des données sur le gabarit de dent (7), au moyen d'une déformation de surface laplacienne pour déformer le gabarit de dent (7) vers la surface de la dent d'appui (1), le procédé étant **caractérisé par** une utilisation, pour la déformation de surface laplacienne, d'une fonction de pondération d'angle (30) dépendant de :

- l'angle (36) entre la direction normale d'une cible (12) sur la surface de la dent d'appui (1) ou la direction normale d'une poignée (11) sur le gabarit de dent (7) ; et
- la direction d'une ligne reliant la cible (12) et la poignée (11) ;
- pour lequel la fonction de pondération d'angle (30) est utilisée pour pondérer la poignée (11) pour déformer le gabarit de dent (7) vers la dent d'appui (1);
- pour lequel les données sur la dent d'appui (1) sont obtenues en scannant un modèle dentaire de la dent d'appui ou en scannant directement une dent d'appui d'un patient ; et
- pour lequel le gabarit de dent représente une représentation numérique d'une dent générique.

**2.** Procédé informatique selon la revendication 1, pour lequel le procédé comprend en outre l'étape consistant à définir la ligne reliant la cible (12) et la poignée (11), comme étant dirigée suivant :

- la direction normale de la cible (12), ou
- la direction normale de la poignée (11),

de sorte que l'angle (36) indique la déviation entre la direction normale de la poignée et la direction normale de la cible.

**3.** Procédé informatique selon la revendication 1, pour lequel le procédé comprend en outre l'étape consistant à définir la ligne reliant la cible (12) et la poignée (11), comme étant dirigée suivant la direction normale de la cible (12) et la fonction de pondération d'angle (30) dépend de la direction normale de la poignée (11) sur le gabarit de dent (7) et de la direction de la ligne reliant la cible (12) et la poignée (11).

**4.** Procédé informatique selon les revendications 1 ou 3, pour lequel le procédé comprend en outre l'étape consistant à définir la fonction de pondération d'angle (30) comme étant décroissante avec un angle croissant (36).

**5.** Procédé informatique selon la revendication 4, pour lequel la décroissance de la fonction de pondération d'angle (30) est décrite par une fonction de pondération de Wendland (23).

**6.** Procédé informatique selon les revendications 1 à 5, pour lequel le procédé utilise un produit de la fonction de pondération d'angle (30) et d'une fonction de pondération globale (19) ou d'une fonction de pondération de distance (27) ou des deux pour pondérer la poignée (11) pour déformer le gabarit de dent (7) vers la dent d'appui (1).

**7.** Procédé informatique selon la revendication 6, pour lequel le procédé comprend en outre l'étape consistant à définir la fonction de pondération globale (19) comme étant croissante à chaque étape de l'itération dans le cas où la déformation de surface laplacienne est effectuée de manière itérative.

**8.** Procédé informatique selon les revendications 6 ou 7, pour lequel le procédé comprend en outre l'étape consistant à définir la fonction de pondération de distance (27) comme étant décroissante lorsque les distances (33) croissent entre la cible (12) et la poignée (11), pour lequel la dépendance de la pondération de distance à la distance (33) peut varier à chaque étape de l'itération dans le cas où la déformation de surface laplacienne est effectuée de manière itérative.

**9.** Procédé informatique selon les revendications 1 à 8, pour lequel le procédé comprend en outre l'étape consistant à définir les données sur le gabarit de dent (7) comme étant un premier maillage polygonal (32) décrivant la surface du gabarit de dent (7) et à définir les données sur la dent d'appui (1) comme étant un deuxième maillage polygonal (31) décrivant la surface de la dent d'appui (1), pour lequel la poignée (11) s'étend à l'intérieur d'un polygone du premier maillage (32), sur un bord d'un polygone ou sur un sommet d'un polygone et pour lequel la cible (12) s'étend à l'intérieur d'un polygone du deuxième maillage (31), sur un bord d'un polygone (31) ou sur un sommet d'un polygone (31).

10. Procédé informatique selon la revendication 9, pour lequel le procédé comprend en outre l'étape consistant à définir la direction normale de la cible (12)/poignée (11) :

- lorsque la cible (12)/poignée (11) s'étend à l'intérieur du polygone, par la direction normale du polygone du deuxième/premier maillage (32, 31) ou par une moyenne de la direction normale du polygone et des directions normales des polygones qui lui sont voisins ;
- lorsque la cible (12)/poignée (11) s'étend sur un bord d'un polygone du deuxième/premier maillage (32, 31), par les directions normales des polygones comprenant ce bord ;
- lorsque la cible (12)/poignée (11) s'étend sur un sommet d'un polygone du deuxième/premier maillage (32, 31), par une moyenne des directions normales des polygones comprenant ce sommet comme point d'angle ou des polygones s'étendant à l'intérieur une sphère ou un volume d'une taille prédéfinie autour du sommet.

11. Support lisible par un ordinateur, sur lequel sont stockées des instructions qui, lorsqu'elles sont exécutées par un processeur, sont adaptées à mettre en oeuvre n'importe quelles étapes du procédé selon les revendications 1 à 10.

FIG. 1

FIG. 2

FIG. 3

FIG. 4a

FIG. 4b

FIG. 5

FIG. 6

FIG. 7

FIG. 8

FIG. 9

FIG. 10

FIG. 11a

FIG. 11b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. STEINBRECHER et al.** Dental inlay and onlay construction by iterative Laplacian surface editing. *Eurographics Symposium on Geometry Processing 2008,* 02 July 2008, vol. 27 (5), 1441-1447